(19) Europäisches Patentamt

European Patent Office

Office européen des brevets

(11) **EP 1 203 651 B1**

(12) **EUROPEAN PATENT SPECIFICATION**

(45) Date of publication and mention
of the grant of the patent:
**22.11.2006 Bulletin 2006/47**

(21) Application number: **00935644.5**

(22) Date of filing: **12.06.2000**

(51) Int Cl.:
**B29C 45/78** (2006.01)    **B29C 71/02** (2006.01)
**G02B 3/00** (2006.01)    **G02B 3/08** (2006.01)
**B29L 11/00** (2006.01)

(86) International application number:
**PCT/JP2000/003800**

(87) International publication number:
**WO 2000/076742 (21.12.2000 Gazette 2000/51)**

(54) **METHOD FOR PRODUCING AN OPTICAL SHEET**

VERFAHREN ZUR HERSTELLUNG EINER OPTISCHEN FOLIE

PROCEDE DE PREPARATION D'UNE FEUILLE OPTIQUE

(84) Designated Contracting States:
**AT BE CH CY DE DK ES FI FR GB GR IE IT LI LU
MC NL PT SE**

(30) Priority: **11.06.1999 JP 16497699**

(43) Date of publication of application:
**08.05.2002 Bulletin 2002/19**

(73) Proprietor: **KURARAY CO., LTD.
Kurashiki-shi, Okayama 710-8622 (JP)**

(72) Inventors:
• **ITO, Toshiyuki**
**Tsukuba-shi,**
**Ibaraki 305-0841 (JP)**
• **MATSUZAKI, Ichiro**
**Nakajho-machi, Kitakanbara-gun, Niigata (JP)**
• **SUZUKI, Masahiro**
**Tsukuba-shi,**
**Ibaraki 305-0841 (JP)**
• **WARINO, Koichi**
**Tsukuba-shi,**
**Ibaraki 305-0841 (JP)**

(74) Representative: **Vossius & Partner
Siebertstrasse 4
81675 München (DE)**

(56) References cited:
**EP-A- 0 450 612**    **EP-A- 0 639 438**
**EP-A2- 0 450 612**    **JP-A- 8 227 003**
**JP-A- 9 066 541**    **US-A- 4 225 109**
**US-A- 4 793 953**    **US-A- 5 399 303**
**US-A- 5 658 522**    **US-A- 5 840 352**

• **HERRMANN, K: "Physikalisch-Technisches
Praktikum: Digitale Bildverarbeitung in der
Strukturanalyse" [Online] , LABORATORIUM
FÜR TECHNISCHE MECHANIK, UNIVERSITÄT
PADERBORN XP002213027 Retrieved from the
Internet: <URL: http://wwwfb10.uni-
paderborn.de/LTM/Lehre/ Aktuelles_Lehre/
Praktikum_Spannungsoptik.P DF> [retrieved
on 2002-09-10] * the whole document ***
• **MCLELLAN G W ET AL: "GLASS ENGINEERING
HANDBOOK, PASSAGE" , GLASS
ENGINEERING HANDBOOK, XX, XX, PAGE(S)
228-231 XP002051507 * page 2.30 - page 2.31 ***
• **SCHOLZE H: "GLAS NATUR, STRUKTUR UND
EIGENSCHAFTEN" , GLAS, NATUR, STRUKTUR
UND EIGENSCHAFTEN, SPRINGER VERLAG,
BERLIN, DE, PAGE(S) 224-231 XP002051509 *
page 225, paragraph 3.5.3.1 ***
• **HINZ W: "SILIKATE. BAND 1 DIE SILIKATE UND
IHRE UNTERSUCHUNGSMETHODEN,
PASSAGE" , SILIKATE, XX, XX, PAGE(S) 217-218
XP002051510 * page 217, right-hand column ***

EP 1 203 651 B1

**Description**

The present invention relates to a method for producing an optical sheet having very fine surface irregularities such as a Fresnel lens sheet or a lenticular lens sheet to be used for a screen of a projection TV or a projector, or a condensing Fresnel lens sheet or an emboss sheet.

When a large size lens sheet such as Fresnel lens sheet, lenticular lens sheet, etc. is produced, it has been generally practiced to use a press method. According to this method, a planar lenticular mold having irregular surface pattern to match the irregular surface pattern of the desired lens surface is heated, and by pressing this lenticular mold onto a resin plate, irregular surface pattern on the surface of the lenticular mold is transferred to the resin plate. However, this press method has such problems that molding cycle is long and productivity is not very high. In this respect, a photo-polymer method (2P method) has been recently developed. According to this method, UV-setting resin is coated on a lenticular mold, and a resin plate is placed on it. Then, ultraviolet ray is irradiated to harden the UV-setting resin, and a large size lens sheet is formed. However, the productivity is not sufficiently improved by the use of this 2P method.

On the other hand, another method is introduced, in which a metal mold having irregular surface pattern to match the irregular surface pattern of the desired lens is used, and a relatively small size optical sheet is molded by an injection molding method. In the injection molding method, molten resin is injected and filled in a cavity of the metal mold, and pressure is applied in the cavity via the molten resin in spool or runner until gate is cooled down and solidified (dwell pressure application process), and the pattern of the metal mold is transferred to the resin. After the gate is solidified, the resin in the metal mold is cooled down and solidified, and a molded product (optical sheet) is obtained.

In EP 0 450 612 A2 a process for producing a resin molded article is disclosed. Therein an injection-molded article of a thermoplastic resin is heated by a combination with far infrared ray having a frequency from $10^{11}$ to $10^{14}$ Hz and either hot heating or heat insulation to diminish a residual stress in the molded article in a short period of time.

US 5 658 522 A discloses a process and an apparatus for the production of a plastic article of large area and small thickness. Plastic material is injected in a viscous condition into a mold cavity which is defined by a bottom and a top mold portion. The two mold portions form a pre-molding cavity during the operation of injection of the plastic material before forming the definitive mold cavity.

In US 4 225 109 A an insulated metal mold for molding thermoplastic resin is disclosed having a molding surface defining the cavity of a mold. The molding surface is provided by a thin metal layer. Further a layer of heat insulation material is formed on the inner side of the metal layer.

In EP 0 639 428 A2 a multilayered insulated molten structure for forming textured articles is disclosed. An insulation layer is deposited on the mold core arid a multilayered skinlayer is deposited on the insulation layer.

In US 4 793 953 A a method and apparatus for high-pressure injection molding of optical thermoplastic parts is disclosed. Therein the optical surfaces of a molded part are formed by intimate contact with suitably contoured or profiled and lapped surfaces of one or more optical mold insert elements. The optical surface of such mold element is of a different composition metallurgically than is the bulk composition of the rest of the mold element.

In US 5 840 352 A a mold assembly for forming a Fresnel lens by injection molding is disclosed comprising movable and stationary molds coupled with each other. The mold assembly includes a Fresnel forming face formed on the inside of the movable mold. Melted resin is injected into the mold assembly for forming the Fresnel plate. At least one annular slit is formed through, and arranged inside, the mold assembly along a circle concentric with the Fresnel plate for blowing compressed air towards the Fresnel plate.

The molten resin injected and filled in the cavity by the injection molding method is quickly cooled down when it is brought into contact with the surface of the cavity. A cooled and solidified layer is formed, and the molten resin is filled in the cavity. When the cooled and solidified layer is formed, pressure distribution occurs in the cavity as the molten resin is filled. This exerts action as residual stress of the molded product and causes warping, deformation, etc. after molding. Dwell pressure is applied to compensate shrinkage of the molded product after injection molding, and this also causes residual stress in the molded product.

If there is residual stress remaining in the molded product, warping, waviness, etc. are very likely to occur on the molded product when it is left under environmental condition of high temperature and high humidity for long time. The larger and the thinner the molded product is, the higher the extent of warping and waviness is in the molded product.

To suppress the formation of the cooled and solidified layer, which causes the development of residual stress, attempts are made to increase temperature of the molten resin, to raise temperature of the metal mold, or to increase filling rate. In the past, however, there has been no attempt to study the standard value of residual stress remaining in the optical sheet after molding. Thus, each time the optical sheet is formed by changing the molding condition, it is necessary to determine whether the molding condition is adequate or not by performing long-term reliability test.

To solve the above problems, it is an object of the present invention to provide a method for producing an optical sheet, which has lower residual stress and is free from warping, deformation, etc.

This object is achieved with the features of the claims.

In the optical sheet produced according to the invention, each of stresses on the surfaces of the two opposing main planes is up to 19.62 MPa (200 kg/cm²), and the difference of stress on the two main planes is preferably within 20%. Here, "main planes" means two opposing planes having large area and corresponding to exit surface of the light and to rear surface of the optical sheet. For instance, this optical sheet has an area or 4000 cm² or more and thickness of 4 mm or less.

The stress as described above is calculated as follows: A test piece of about 0.6 mm in width and having a mirror surface is prepared from the optical sheet. On the test piece thus obtained, retardation R of strain is determined under multiplication factor of x 5 using a Babinet compensator type precision strain gauge with Na light source. The stress is calculated by the following equation:

$$\textbf{Strain (stress)} = \textbf{R/(E} \times \textbf{T)}$$

where R is retardation, and T represents thickness (cm) of the test piece where retardation is measured, and E is a photoelastic constant ($1.02 \times 10^{-5}$ (nm/(cm.Pa)) [(nm/cm) /(kg/cm²)]) of the material of the optical sheet.

The invention is further described with reference to the drawings:

Fig. 1 is a drawing to show a shape of a molded product produced using a metal mold No. 1 in an embodiment of the present invention;
Fig. 2 is a drawing to show a shape of a molded product produced using a metal mold No. 2 in an embodiment of the present invention;
Fig. 3 is a drawing to show a shape of a molded product produced using a metal mold No. 3 in an embodiment of the present invention;
Fig. 4 is a drawing to show a shape of a molded product produced using a metal mold No. 4 in an embodiment of the present invention;
Fig. 5 is a drawing to show a shape of a molded product produced using a metal mold No. 5 in an embodiment of the present invention;
Fig. 6 is a drawing to explain a measuring position and a measuring method of a deformation amount of an optical sheet. Fig. 6 (a) represents a measuring position, and Fig. 6 (b) shows a measuring method; and
Fig. 7 shows specification of each of the metal molds used in the Examples and the Comparative examples.

According to the invention an optical sheet is produced by an injection compression molding method in order to limit stress on the surface of the optical sheet up to 19.62 MPa, (200 kg/cm²). After the optical sheet is prepared by this method, annealing (post-processing) should be performed so that the stress on the surface will be up to 19.62 MPa (200 kg/cm²). Specifically, the optical sheet prepared by the injection compression molding method is sandwiched between glass plates. Then, annealing is performed for 2 - 4 hours at an environmental temperature, which is by 10 °C to 20 °C lower than deflection temperature under load (to be determined by the method such as ASTM D648) of a molding material, which constitutes the optical sheet.

Also, when the injection molding method (proposed in JP-A-11-129305) is used, it is possible to limit the stress on the surface of the optical sheet to 19.62 MPa (200 kg/cm²) or less without performing annealing procedure, depending on the preset molding condition. According to this injection molding method, a thin plate member such as nickel plate having a low thermal conductivity member (such as polyimide film) attached on its rear surface is placed in a cavity of a metal mold, and a molding material is filled in the metal mold. Near the surface of the metal mold where temperature is decreased from a level of transfer initiation temperature or higher to a level lower than the transfer initiation temperature, the molding material is cooled down through the contact with the metal mold. The low thermal conductivity member is designed to have such thickness that temperature of the molding material is again increased to the level higher than the transfer initiation temperature. According to this method, in the injection molding process, cavity volume of the metal mold is changed during injection and filling or after the completion of the filling of the synthetic resin. (Cavity volume is increased and then decreased, or it is decreased after increased.) By the use of the injection molding method (proposed in the specifications of JP-A-2000-218654, application no.11-023863, and JP-A-2000-233428, application no. 11-036924, it is possible to limit the stress on the surface of the optical sheet to 19.62 MPa (200 kg/cm²) or less without performing annealing procedure, depending on the preset molding condition.

There is no special restriction on the synthetic resin used in the injection molding so far as it is a transparent thermoplastic resin. For instance, polymethyl methacrylate, polycarbonate, polystyrene, thermoplastic elastomer, non-crystalline polyolefin, polyamide, or copolymer of these substances may be used.

Detailed description will be given below on the present invention referring to the examples. The equipment and the devices used for the manufacture of the optical sheet in the examples are as follows:

(a) Injection molding machine

An injection molding machine "SG-150SYCAP M III" (trade name; product by Sumitomo Heavy Industries, Ltd.), or "MDIP-1400" (trade name; product by Meiki Co., Ltd.) was used.

(b) Metal mold

Five types of metal molds were used. The size of each of the metal molds was as follows:

(Metal mold No. 1)

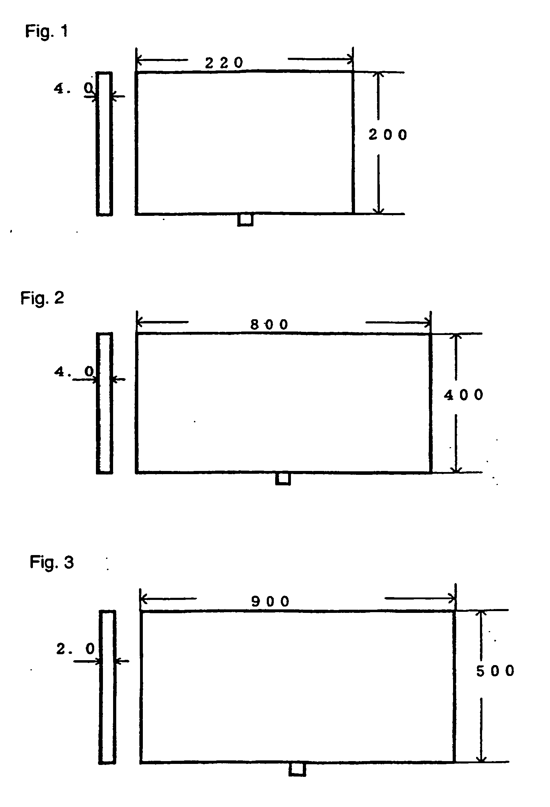

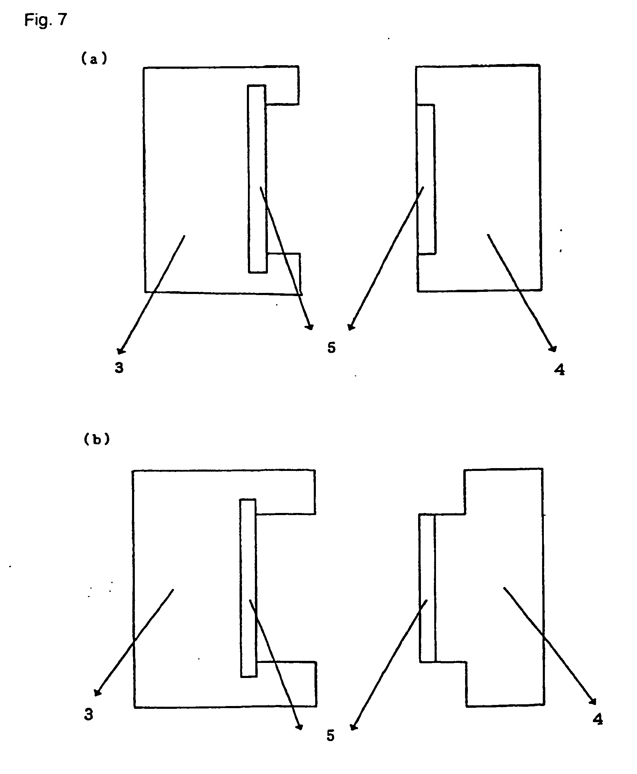

This has a cavity of planar shape in size of 200 $\times$ 220 $\times$ 4.0 mm (length $\times$ width $\times$ thickness). On one of the main planes, a Fresnel lens pattern of 10 to 80 $\mu$m in height is formed. As shown in Fig. 1, a gate of 25 mm in width and 3.5 mm in thickness is provided at the center of lateral side of the metal mold. Gate of the lens sheet (optical sheet) is cut using heat nipper or saw blade. The configuration of the metal mold No. 1 is as shown in Fig. 7 (a). Thin plate members 5 are mounted on a movable side 3 and a fixed side 4, and the Fresnel lens pattern is formed on one of the thin plate members 5. When necessary, the member with low thermal conductivity is attached on rear surface of the thin plate member.

(Metal mold No. 2)

This has a cavity of planar shape in size of 400 $\times$ 800 $\times$ 4.0 mm (length $\times$ width $\times$ thickness). On one of the main planes, a Fresnel lens pattern of 10 to 80 $\mu$m in height is formed. As shown in Fig. 2, a gate in size of 25 mm in width and 3.5 mm in thickness is provided at the center of lateral side of the metal mold. The configuration of the metal mold No. 2 is as shown in Fig. 7 (b). Thin plate members 5 are mounted on a moving side 3 and a fixed side 4 respectively, and the Fresnel lens pattern is formed on one of the thin plate members 5. When necessary, the member with low thermal conductivity is attached on rear surface of the thin plate member. The metal molds No. 3 to No. 5 have the same arrangement as the metal mold No. 2.

(Metal mold No. 3)

This has a cavity of planar shape in size of 500 $\times$ 900 $\times$ 2.0 mm (length $\times$ width $\times$ thickness). On one of the main planes, a Fresnel lens pattern of 10 to 80 $\mu$m in height is formed. As shown in Fig. 3, a gate of 25 mm in width and 1.5 mm in thickness is provided at the center of lateral side of the metal mold.

(Metal mold No. 4)

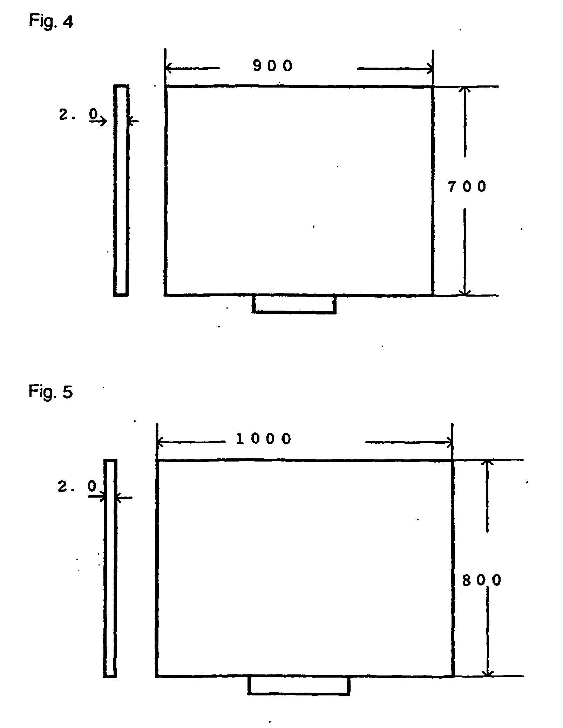

This has a cavity of planar shape in size of 700 $\times$ 900 $\times$ 2.0 mm (length $\times$ width $\times$ thickness). On one of the main planes, a Fresnel lens pattern of 10 to 80 $\mu$m in height is formed. On the other surface, a prism pattern of 10 $\mu$m in height is formed. As shown in Fig. 4, a gate of 500 mm in width and 1.5 mm in thickness is provided at the center of lateral side of this metal mold.

(Metal mold No. 5)

This has a cavity of planar shape in size of 800 $\times$ 1000 $\times$ 2.0 mm (length $\times$ width $\times$ thickness). On one of main planes, a Fresnel lens pattern of 10 to 80 $\mu$m in height is formed. On the other surface, a prism pattern of 10 $\mu$m in height is formed. As shown in Fig. 5, a gate of 500 mm in width and 1.5 mm in thickness is provided at the center of lateral side of this metal mold.

(c) Molding material

A methacrylic resin molding material "Parapet GH-1000S" (trade name; product by Kuraray Co., Ltd.) was used.

(d) Method to measure stress on the surface of the molded product

Using a low speed saw "ISOMET" (trade name; product by Buehler), a piece in form of a tablet of about 0.6 mm in width was cut off from the molded product. By polishing both cutting surfaces using No. 2000 sandpaper and metal polishing agent, a test piece having mirror surface was prepared. On each of the test pieces thus obtained, distortion retardation R was determined under the magnification factor of $\times$ 5 using Na light source and a Babinet compensator type precision strain gauge "SVP-30 II" (trade name; product by Toshiba Glass Co., Ltd.). The stress was calculated by the following equation:

$$\text{Strain (stress)} = R/(3.8 \times T)$$

where R is retardation, and T represents thickness (cm) of the test piece at retardation measuring portion. The value 3.8 is a photoelastic constant ($1{,}02 \cdot 10^{-12}$ $m^2$/N) respectivly [(nm/cm) / (kg/$cm^2$)] of polymethyl methacrylate.

(e) Method to measure transfer rate

Using a surface roughness measuring instrument Surfcorder "SE-30D" (trade name; product by Kosaka Laboratory Ltd.), the height of the pattern on the molded product was measured, and a ratio of pattern dimension of the molded product to pattern dimension of the metal mold used for the molding (dimension of molded product/dimension of metal mold) was calculated.

(f) Method to measure deformation amount

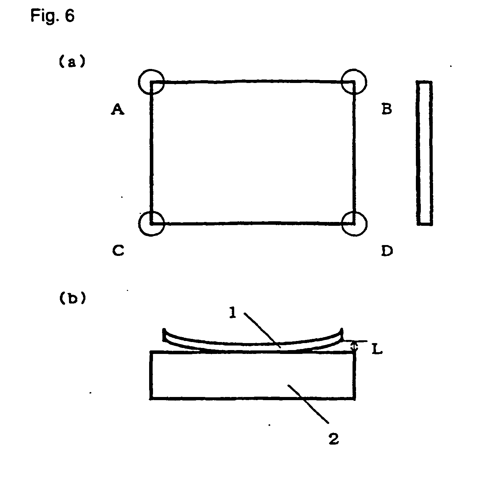

As shown in Fig. 6 (a) and Fig. 6 (b), the deformation amount of the optical sheet 1 was measured at each of the corners of the molded product. Specifically, the optical sheet 1 was placed on a platen 2, and a gap L between the platen 2 and the optical sheet 1 was measured using a thickness gauge, and a error between the form of the metal mold and the form of the optical sheet was determined.

(g) Constant temperature and humidity test

Reliability test of the optical sheet was performed using a constant temperature and humidity chamber (manufactured by Tabai Co., Ltd.). Testing condition was 50 °C at 80% relative humidity for 300 hours.

Examples 1 to 5 and Comparative examples 1 to 5

Using the injection molding machine described in (a) and the metal molds of (b) above, optical sheets were prepared under the molding condition and the annealing condition shown in Table 1. In each of the Examples and Comparative examples, injecting condition and cooling time were the same. The injecting condition was 100 cc/sec., and the cooling time was 60 S. On the optical sheets thus obtained, stress on the surface layer where the Fresnel lens pattern was formed was measured by the measuring method of (d) above. Then, each optical sheet was left to stand under environmental condition of 50 °C and 80% relative humidity in the constant temperature and humidity chamber as given in (g) above. The amount of deformation after 300 hours was determined by the measuring method given in (f) above. The results are summarized in Table 2 and Table 3. As shown in Fig. 6, measuring position of the stress and the deformation shown in Tables 2 and 3 were as follows : Measuring positions A - D were at four corners of the lens sheet, and the measuring position E is at the center. (The same applies to Table 5 as given later.)

Table 1

|  | Molding machine | Resin temperature (°C) and metal mold temperature (°C) | Metal mold (Thin plate member (thickness in mm) /low thermal conductivity member (thickness in mm) | Annealing |
|---|---|---|---|---|
| Example 1⊗ | SG-150 | 270 80 | Nickel (0.5)/None | 80 °C for 3 hours. Then, gradually cooled down |
| Example 2 | MDIP-1400 | 270 80 | Nickel (0.5)/ polyimide (0.1) | None |

(continued)

|  | Molding machine | Resin temperature (°C) and metal mold temperature (°C) | Metal mold (Thin plate member (thickness in mm) /low thermal conductivity member (thickness in mm) | Annealing |
|---|---|---|---|---|
| Example 3 | MDIP-1400 | 270 80 | Nickel (0.5)/ polyimide (0.2) | None |
| Example 4 | MDIP-1400 | 270 80 | Nickel (0.5)/ polyimide (0.3) | None |
| Example 5 | MDIP-1400 | 270 80 | Nickel (0.5)/ polyimide (0.3) | None |
| Comparative example 1 | SG-150 | 270 80 | Nickel (0.5)/None | None |
| Comparative example 2 | MDIP-1400 | 270 80 | Nickel (0.5)/None | None |
| Comparative example 3 | MDIP-1400 | 270 80 | Nickel (0.5)/None | None |
| Comparative example 4 | MDIP-1400 | 270 80 | Nickel (0.5)/None | None |
| Comparative example 5 | MDIP-1400 | 270 80 | Nickel (0.5)/None | None |
| $\otimes$ not covered by the invention | | | | |

Table 2

|  | Metal mold No. | Stress on surface layer (MPa) | | Pattern transfer rate | Deformation before test (mm) | Deformation after test (mm) |
|---|---|---|---|---|---|---|
|  |  | Measuring position | Stress | | | |
| Example 1 | 1 | A | 11,48 (117kg/cm$^2$) | 0.90 | 0.02 | 0.21 |
|  |  | B | 10,20 (104kg/cm$^2$) | 0.92 | 0.03 | 0.17 |
|  |  | C | 9,42 (96kg/cm$^2$) | 0.91 | 0.03 | 0.14 |
|  |  | D | 8,83 (90kg/cm$^2$) | 0.92 | 0.02 | 0.03 |
|  |  | E | 9,81 (100kg/cm$^2$) | 0.95 | | |
| Example 2 | 2 | A | 15,20 (155kg/cm$^2$) | 0.94 | 0.02 | 0.30 |
|  |  | B | 14,71 (150kg/cm$^2$) | 0.94 | 0.03 | 0.32 |
|  |  | C | 11,97 (122kg/cm$^2$) | 0.93 | 0.02 | 0.20 |
|  |  | D | 13,05 (133kg/cm$^2$) | 0.93 | 0.03 | 0.03 |

(continued)

| | Metal mold No. | Stress on surface layer (MPa) | | Pattern transfer rate | Deformation before test (mm) | Deformation after test (mm) |
|---|---|---|---|---|---|---|
| | | Measuring position | Stress | | | |
| | | E | 14,22 (145kg/cm$^2$) | 0.95 | | |
| Example 3 | 3 | A | 17,17 (175kg/cm$^2$) | 0.96 | 0.04 | 0.23 |
| | | B | 15,70 (160kg/cm$^2$) | 0.93 | 0.03 | 0.15 |
| | | C | 12,95 (132kg/cm$^2$) | 0.97 | 0.02 | 0.20 |
| | | D | 13,05 (133kg/cm$^2$) | 0.98 | 0.03 | 0.13 |
| | | E | 14,22 (145kg/cm$^2$) | 0.95 | | |
| Example 4 | 4 | A | 16,68 (170kg/cm$^2$) | 0.90 | 0.05 | 0.35 |
| | | B | 16,19 (165kg/cm$^2$) | 0.91 | 0.06 | 0.28 |
| | | C | 13,93 (142kg/cm$^2$) | 0.95 | 0.05 | 0.25 |
| | | D | 12,07 (123kg/cm$^2$) | 0.91 | 0.03 | 0.33 |
| | | E | 14,22 (145kg/cm$^2$) | 0.90 | | |
| Example 5 | 5 | A | 16,68 (170kg/cm$^2$) | 0.96 | 0.07 | 0.20 |
| | | B | 16,28 (166kg/cm$^2$) | 0.93 | 0.06 | 0.25 |
| | | C | 14,03 (143kg/cm$^2$) | 0.92 | 0.03 | 0.28 |
| | | D | 13,73 (140kg/cm$^2$) | 0.91 | 0.05 | 0.24 |
| | | E | 15,20 (155kg/cm$^2$) | 0.95 | | |

Table 3

| | Metal. mold No. | Stress on surface layer (MPa) | | Pattern transfer rate | Deformation before test (mm) | Deformation after test (mm) |
|---|---|---|---|---|---|---|
| | | Measuring position | Stress | | | |
| Example 1 | 1 | A | 22.07 (225kg/cm$^2$) | 0.95 | 0.04 | 2.54 |
| | | B | 23.15 (236kg/cm$^2$) | 0.93 | 0.03 | 3.11 |
| | | C | 21.88 (223kg/cm$^2$) | 0.94 | 0.04 | 2.20 |
| | | D | 24.13 (246kg/cm$^2$) | 0.94 | 0.05 | 2.50 |
| | | E | 23.05 (235kg/cm$^2$) | 0.93 | | |

(continued)

| | Metal. mold No. | Stress on surface layer (MPa) | | Pattern transfer rate | Deformation before test (mm) | Deformation after test (mm) |
|---|---|---|---|---|---|---|
| | | Measuring position | Stress | | | |
| Example 2 | 2 | A | 25.01 (255kg/cm$^2$) | 0.93 | 0.13 | 5.35 |
| | | B | 24,82 (253kg/cm$^2$) | 0.93 | 0.08 | 4.17 |
| | | C | 22,56 (230kg/cm$^2$) | 0.94 | 0.10 | 3.83 |
| | | D | 21,19 (216kg/cm$^2$) | 0.95 | 0.09 | 3.44 |
| | | E | 21,09 (215kg/cm$^2$) | 0.92 | | |
| Example 3 | 3 | A | 25,00 (265kg/cm$^2$) | 0.91 | 0.23 | 5.30 |
| | | B | 26,78 (273kg/cm$^2$) | 0.91 | 0.18 | 6.21 |
| | | C | 24,62 (251kg/cm$^2$) | 0.92 | 0.13 | 4.30 |
| | | D | 23,44 (239kg/cm$^2$) | 0.95 | 0.22 | 3.20 |
| | | E | 23,64 (241kg/cm$^2$) | 0.97 | | |
| Example 4 | 4 | A | 31,88 (325kg/cm$^2$) | 0.90 | 0.43 | 3.35 |
| | | B | 28,74 (293kg/cm$^2$) | 0.93 | 0.31 | 4.43 |
| | | C | 25,51 (260kg/cm$^2$) | 0.95 | 0.21 | 3.22 |
| | | D | 24,62 (251kg/cm$^2$) | 0.94 | 0.37 | 3.21 |
| | | E | 30,90 (315kg/cm$^2$) | 0.90 | | |
| Example 5 | 5 | A | 28,25 (288kg/cm$^2$) | 0.90 | 0.32 | 4.23 |
| | | B | 29,04 (296kg/cm$^2$) | 0.93 | 0.17 | 5.13 |
| | | C | 26,98 (275kg/cm$^2$) | 0.95 | 0.19 | 4.83 |
| | | D | 28,15 (287kg/cm$^2$) | 0.98 | 0.25 | 4.20 |
| | | E | 25,90 (264kg/cm$^2$) | 0.97 | | |

As shown in Table 2, in the optical sheets of Examples 1 to 5 where stress on the surface layer was 19,62 MPa (200 kg/cm$^2$) or less, the deformation amount was low after the constant temperature and humidity test. On the other hand (as shown in Table 3), in the optical sheets of Comparative examples 1 to 5 where stress on the surface layer was more than 19,62 MPa (200 kg/cm$^2$), the deformation amount after the constant temperature and humidity test was higher. On the lens sheets of Examples 1 to 5, deformation amount was lower in each of the following tests: (1) a test to dry up at 70 °C for 300 hours; (2) a test to leave the sheet at -20 °C for 300 hours; and (3) a test to leave the sheet alternately at low temperature of -20 °C and at high temperature of +70 °C and to repeat this for 100 cycles.

Examples 6 to 13

Using the injection molding machine of (a) and the metal molds given in (b) above, optical sheets were prepared under the molding condition and the annealing condition shown in Table 4. In each of these Examples, the injecting condition and the cooling time were the same. The injecting condition was 100 cc/sec., and the cooling time was 60 S. On the lens sheets thus obtained, stress was determined by the measuring method given in (d) above on the surface layer where the Fresnel lens pattern was formed and the surface where the Fresnel lens pattern was not formed (mirror surface). Then, the deformation amount was measured by the same procedure as in Examples 1 to 5. The results are summarized in Table 5.

Table

| | Molding machine | Metal mold temperature (°C) | | Metal mold (Thin plate member (thickness in mm) /low thermal conductivity member (thickness in mm) | Annealing |
| --- | --- | --- | --- | --- | --- |
| | | Prism surface side | Fresnel tens side | | |
| Example 6 ⊗ | SG-150 | 80 | 80 | Nickel (0.5)/None | 80 °C for 3 hours |
| Example 7 | MDIP-1400 | 80 | 80 | Nickel (0.5)/ polyimide (0.1) | None |
| Example 8 | MDIP-1400 | 80 | 80 | Nickel (0.5)/ polyimide (0.2) | None |
| Example 9 | MDIP-1400 | 80 | 80 | Nickel (0.5)/ polyimide (0.3) | None |
| Example 10 | MDIP-1400 | 80 | 80 | Nickel (0.5)/ polyimide (0.3) | None |
| Example 11⊗ | SG-150 | 80 | 70 | Nickel (0.5)/None | 80 °C for 2 hours |
| Example 12 | MDIP-1400 | 60 | 80 | Nickel (0.5)/ polyimide (0.1) | None |
| Example 13 | MDIP-1400 | 60 | 80 | Nickel (0.5)/ polyimide (0.2) | None |
| ⊗ Examples not covered by the invention | | | | | |

Table 5

| | Metal mold No. | Stress on surface layer (MPa) | | | Pattern transfer rate | Deformation before test (mm) | Deformation after test (mm) |
| --- | --- | --- | --- | --- | --- | --- | --- |
| | | Measuring position | Stress (prism surface side) | Stress (Fresnel lens side) | | | |
| Example 6 | 1 | A | 12,46 (127kg/cm$^2$) | 13,54 (138kg/cm$^2$) | 0.93 | 0.02 | 0.25 |
| | | B | 13,34 (136kg/cm$^2$) | 12,26 (125kg/cm$^2$) | 0.99 | 0.03 | 0.27 |
| | | C | 10,59 (108kg/cm$^2$) | 9,61 (98kg/cm$^2$) | 0.93 | 0.01 | 0.13 |
| | | D | 10,00 (102kg/cm$^2$) | 10,30 (105kg/cm$^2$) | 0.92 | 0.03 | 0.15 |
| | | E | 12,07 (123kg/cm$^2$) | 11,57 (118kg/cm$^2$) | 0.93 | | |

(continued)

| | Metal mold No. | Stress on surface layer (MPa) | | | Pattern transfer rate | Deformation before test (mm) | Deformation after test (mm) |
|---|---|---|---|---|---|---|---|
| | | Measuring position | Stress (prism surface side) | Stress (Fresnel lens side) | | | |
| Example 7 | 2 | A | 17,17 (175kg/cm$^2$) | 17,66 (180kg/cm$^2$) | 0.92 | 0.03 | 0.34 |
| | | B | 14,71 (150kg/cm$^2$) | 14,22 (145kg/cm$^2$) | 0.90 | 0.03 | 0.32 |
| | | C | 11,97 (122kg/cm$^2$) | 11,08 (113kgk/cm$^2$) | 0.92 | 0.04 | 0.27 |
| | | D | 13,05 (133kg/cm$^2$) | 12,16 (124kg/cm$^2$) | 0.93 | 0.06 | 0.15 |
| | | E | 12,46 (127kg/cm$^2$) | 11,77 (120kg/cm$^2$) | 0.96 | | |
| Example 8 | 3 | A | 18,15 (185kg/cm$^2$) | 15,70 (160kg/cm$^2$) | 0.93 | 0.04 | 0.36 |
| | | B | 16,68 (170kg/cm$^2$) | 15,20 (155kg/cm$^2$) | 0.94 | 0.03 | 0.25 |
| | | C | 14,91 (152kg/cm$^2$) | 13,14 (134kg/cm$^2$) | 0.98 | 0.03 | 0.20 |
| | | D | 13,73 (140kg/cm$^2$) | 13,44 (137kg/cm$^2$) | 0.95 | 0.02 | 0.23 |
| | | E | 18,15 (185kg/cm$^2$) | 15,99 (163kg/cm$^2$) | 0.95 | | |
| Example 9 | 4 | A | 15,99 (163kg/cm$^2$) | 17,66 (180kg/cm$^2$) | 0.90 | 0.04 | 0.41 |
| | | B | 17,26 (176kg/cm$^2$) | 15,20 (155kg/cm$^2$) | 0.92 | 0.05 | 0.23 |
| | | C | 13,93 (142kg/cm$^2$) | 12,36 (126kg/cm$^2$) | 0.94 | 0.07 | 0.45 |
| | | D | 15,01 (153kg/cm$^2$) | 17,17 (175kg/cm$^2$) | 0.93 | 0.07 | 0.25 |
| | | E | 12,95 (132kg/cm$^2$) | 13,54 (138kg/cm$^2$) | 0.92 | | |
| Example 10 | 5 | A | 14,22 (145kg/cm$^2$) | 16,28 (166kg/cm$^2$) | 0.91 | 0.04 | 0.16 |
| | | B | 17,17 (175kg/cm$^2$) | 15,20 (155kg/cm$^2$) | 0.92 | 0.07 | 0.35 |
| | | C | 14,52 (148kg/cm$^2$) | 13,05 (133kg/cm$^2$) | 0.95 | 0.05 | 0.37 |
| | | D | 12,95 (132kg/cm$^2$) | 14.03 (143kg/cm$^2$) | 0.95 | 0.08 | 0.51 |
| | | E | 17,66 (180kg/cm$^2$) | 16,19 (165kg/cm$^2$) | 0.94 | | |
| Example 11 | 1 | A | 11,77 (120kg/cm$^2$) | 15,89 (162kg/cm$^2$) | 0.93 | 0.01 | 2.21 |
| | | B | 12,26 (125kg/cm$^2$) | 15,99 (163kg/cm$^2$) | 0.93 | 0.03 | 2.12 |
| | | C | 10,79 (110kg/cm$^2$) | 14,32 (146kg/cm$^2$) | 0.94 | 0.03 | 1.87 |

(continued)

| | Metal mold No. | Stress on surface layer (MPa) | | | Pattern transfer rate | Deformation before test (mm) | Deformation after test (mm) |
|---|---|---|---|---|---|---|---|
| | | Measuring position | Stress (prism surface side) | Stress (Fresnel lens side) | | | |
| | | D | 9,81 (100kg/cm$^2$) | 14,32 (146kg/cm$^2$) | 0.95 | 0.04 | 2.60 |
| | | E | 12,16 (124kg/cm$^2$) | 13,54 (138kg/cm$^2$) | 0.90 | | |
| Example 12 | 2 | A | 18,15 (185kg/cm$^2$) | 14,22 (145kg/cm$^2$) | 0.92 | 0.33 | 3.45 |
| | | B | 16,68 (170kg/cm$^2$) | 13,05 (133kg/cm$^2$) | 0.92 | 0.25 | 3.23 |
| | | C | 14,71 (150kg/cm$^2$) | 10,89 (111kg/cm$^2$) | 0.94 | 0.28 | 2.48 |
| | | D | 14,42 (147kg/cm$^2$) | 9,81 (100kg/cm$^2$) | 0.95 | 0.23 | 2.51 |
| | | E | 14,32 (146kg/cm$^2$) | 10,79 (110kg/cm$^2$) | 0.96 | | |
| Example 13 | 3 | A | 19,13 (195kg/cm$^2$) | 14,91 (152kg/cm$^2$) | 0.94 | 0.35 | 3.75 |
| | | B | 17,07 (174kg/cm$^2$) | 13,05 (133kg/cm$^2$) | 0.95 | 0.33 | 4.16 |
| | | C | 13,73 (140kg/cm$^2$) | 10,30 (105kg/cm$^2$) | 0.96 | 0.41 | 3.48 |
| | | D | 15,20 (155kg/cm$^2$) | 10,79 (110kg/cm$^2$) | 0.96 | 0.32 | 3.51 |
| | | E | 14,52 (148kg/cm$^2$) | 11,08 (113kg/cm$^2$) | 0.90 | | |

As shown in Table 5, in the optical sheets of Examples 6 to 10 where stress on the surface layer was 19.62 MPa (200 kg/cm$^2$) or less and difference of stress between front surface and rear surface was within 20%, deformation amount after test was very low. On the other hand, in the optical sheets of Examples 11 to 13 where difference of stress between front surface and rear surface was more than 20% although the stress on the surface layer was 19,62 MPa (200 kg/cm$^2$) or less, deformation amount after test was somewhat higher.

Industrial applicability

As described above, in the optical sheet complying with the standard value of the residual stress of the surface according to the present invention, neither warping nor deformation occurs after molding. This optical sheet can be used in the applications such as Fresnel lens sheet or lenticular lens sheet to be used for a screen of a projection TV, a projector, etc., and as a condensing Fresnel lens sheet, an emboss sheet, etc.

**Claims**

1. Method for producing an optical sheet by injection compression molding wherein the optical sheet is **characterized in that** the stress on each surface of two opposing main planes is 19,62 MPa (200 kg/cm$^2$) or less, said method comprising the steps :

   (a) injecting the resin molding material in a metal mold comprising two mold halves (3, 4) wherein each mold half has a thin plate member (5) and a low thermal conductivity member attached to the rear surface of the thin plate member (5), wherein at least one mold half is provided with a pattern, and wherein the low thermal conductivity member is designed to have a thickness from 0,1 mm to 0,3 mm so that the temperature of the molding material is again increased to the level higher than the transfer initiation temperature,

(b) changing a cavity volume of the metal mold during injection and filling or after the completion of the filling of the resin.

(c) cooling the molding material through the contact with the metal mold, and

(d) removing the product from the mold.

2. Method according claim 1, wherein a difference of stress on surface layers of two opposing main planes is within 20%.

3. Method according to any of claims 1 or 2, wherein area of the main plane is 4000 cm$^2$ or more, and thickness is 4mm or less.

4. Method according to any of claims 1 to 3, wherein the optical sheet is a Fresnel lens sheet of which at least one of the main planes, a Fresnel lens pattern of 10 to 80$\mu$m in height is formed.

5. Method according to any of claims 1 to 4, wherein only one mold half is provided with a pattern.

**Patentansprüche**

1. Verfahren zur Herstellung einer optischen Folie durch Preßspritzgießen, wobei die optische Folie **dadurch gekennzeichnet ist, daß** die Spannung an jeder Oberfläche zweier gegenüberliegender Hauptebenen 19,62 MPa (200 kg/cm$^2$) oder weniger beträgt, wobei das Verfahren die Schritte aufweist:

(a) Einspritzen des Harzformmaterials in eine Metallform, die zwei Formhälften (3, 4) aufweist, wobei jede Formhälfte ein dünnes Plattenelement (5) und ein Element mit niedriger Wärmeleitfähigkeit aufweist, das an der Rückseite des dünnen Plattenelements (5) befestigt ist, wobei mindestens eine Formhälfte mit einem Muster versehen ist, und wobei das Element mit niedriger Wärmeleitfähigkeit so gestaltet ist, daß es eine Dicke von 0,1 mm bis 0,3 mm aufweist, so daß die Temperatur des Formmaterials wieder auf ein Niveau erhöht wird, das höher als die Übertragungsanfangstemperatur ist,

(b) Ändern eines Hohlraumvolumens der Metallform während des Einspritzens und Füllens oder nach der Beendigung des Füllens des Harzes,

(c) Abkühlen des Formmaterials durch den Kontakt mit der Metallform, und

(d) Entnehmen des Produkts aus der Form.

2. Verfahren nach Anspruch 1, wobei eine Differenz der Spannung an den Oberflächenschichten zweier gegenüberliegender Hauptebenen innerhalb von 20% liegt.

3. Verfahren nach einem der Ansprüche 1 oder 2, wobei die Fläche der Hauptebene 4000 cm$^2$ oder mehr beträgt und die Dicke 4 mm oder weniger beträgt.

4. Verfahren nach einem der Ansprüche 1 bis 3, wobei die optische Folie eine Fresnel-Linsenfolie ist, bei der auf mindestens einer der Hauptebenen ein Fresnel-Linsenmuster mit einer Höhe von 10 bis 80 $\mu$m gebildet wird.

5. Verfahren nach einem der Ansprüche 1 bis 4, wobei nur eine Formhälfte mit einem Muster versehen ist.

**Revendications**

1. Procédé de préparation d'une feuille optique par moulage par injection-compression dans lequel la feuille optique est **caractérisée en ce que** la contrainte sur chaque surface de deux plans principaux opposés est 19,62 MPa (200 kg/cm$^2$) ou moins, ledit procédé comprenant les étapes de :

(a) injecter le matériau de moulage de résine dans un moule en métal comprenant deux moitiés de moule (3, 4) dans lequel chaque moitié de moule a un élément de plaque mince (5) et un élément à faible conductivité thermique fixé sur la surface arrière de l'élément de plaque mince (5), dans lequel au moins une moitié de moule est pourvue d'un motif, et dans lequel l'élément à faible conductivité thermique est conçu de manière à avoir une épaisseur de 0,1 mm à 0,3 mm de sorte que la température du matériau de moulage est encore augmentée au niveau supérieur à la température d'initiation de transfert,

(b) changer un volume de cavité du moule en métal pendant l'injection et le remplissage ou après la fin du remplissage de résine,

(c) refroidir le matériau de moulage par l'intermédiaire du contact avec le moule en métal, et

(d) enlever le produit du moule.

2. Procédé selon la revendication 1, dans lequel une différence de contrainte sur les couches de surface de deux plans principaux en opposés est dans la plage de 20%.

3. Procédé selon l'une quelconque des revendications 1 ou 2, dans lequel l'aire du plan principal est 4 000 cm$^2$ ou plus, et l'épaisseur est 4 mm ou moins.

4. Procédé selon l'une quelconque des revendications 1 à 3, dans lequel la feuille optique est une feuille de lentille de Fresnel dont au moins l'un des plans principaux, un motif de lentille de Fresnel de 10 à 80 $\mu$m de hauteur est formé.

5. Procédé selon l'une quelconque des revendications 1 à 4, dans lequel une seule moitié de moule est pourvue d'un motif.

Fig. 1

Fig. 2

Fig. 3

Fig. 4

Fig. 5

Fig. 6

(a)

A

B

C

D

(b)

1

L

2

Fig. 7

(a)

3          5          4

(b)

3          5          4